# EUROPÄISCHE PATENTANMELDUNG

(11) **EP 2 312 184 A1**
(43) Veröffentlichungstag der Anmeldung: **20.04.2011**
(21) Anmeldenummer: 10013720.7
(22) Anmeldetag: 18.10.2010
(51) Int. Cl.: F16H 25/20, F16H 25/22

(54) **Kugelgewindetrieb**

(30) Priorität: 19.10.2009 DE 102009049936; 07.12.2009 DE 102009057324
(71) Anmelder: Universität Stuttgart, 70174 Stuttgart (DE)
(72) Erfinder: Frey, Siegfried, 70176 Stuttgart (DE)
(74) Vertreter: Ege, Guido

(57) **Zusammenfassung**

Die Erfindung betrifft einen Kugelgewindetrieb (1,1a,1b) mit einer Gewindespindel mit einer ersten gewindeförmigen Laufbahn, mit einer Vielzahl an dieser abwälzenden Kugeln, einer Doppelmutter (4) mit zwei axial benachbart auf der Gewindespindel angeordneten Muttern (2,2a,2b,3,3a,3b) mit jeweils zweiten, zu der ersten Laufbahn komplementären Laufbahnen zur Aufnahme der Kugeln.

## Beschreibung

Die Erfindung betrifft einen Kugelgewindetrieb mit einer Gewindespindel mit einer ersten gewindeförmigen Laufbahn, mit einer Vielzahl an dieser abwälzenden Kugeln, einer Doppelmutter mit zwei axial benachbart auf der Gewindespindel angeordneten Muttern mit jeweils zweiten, zu der ersten Laufbahn komplementären Laufbahnen zur Aufnahme der Kugeln, wobei die beiden Muttern gegeneinander unter Bildung einer Axialpressung der Kugeln gegenüber den Laufbahnen axial mittels einer Vorspannkraft vorgespannt und drehfest miteinander verbunden sind und abhängig von einer Betriebsrichtung der Doppelmutter auf der Gewindespindel eine Mutter mit einer zu der Vorspannkraft zusätzlichen Belastung beaufschlagt und die andere Mutter entlastet wird.

Kugelgewindetriebe werden insbesondere zur Wandlung eines Drehantriebs in einen axialen Vorschub in Werkzeug- und Produktionsmaschinen eingesetzt. Aus der DE 32 04 919 C1 ist ein gattungsgemäßer Kugelgewindetrieb mit einer Doppelmutter mit zwei geteilten Muttern bekannt, bei dem zur Erzeugung der Vorspannung die beiden Muttern auf der Gewindespindel derart zueinander verdreht werden, dass die Muttern mit ihren Stirnflächen gegeneinander verspannt sind. Auf diese Weise wird an den Kugeln beziehungsweise den Laufbahnen ein Zweipunktkontakt zwischen diesen und den Abstützflächen der Gewindespindel und der Mutter erzeugt, der auch bei hohen Vorspannungen ein gutes Abwälzverhalten vorsieht. Dabei wird je nach Belastungsrichtung des Kugelgewindetriebs die Betriebskraft zwischen einer der beiden Muttern über den dieser zugeordneten Kreislauf der Kugeln auf die Gewindespindel übertragen.

Dabei ist die Stelflgkeit des Kugelgewindetriebs für dessen Funktionsfähigkeit von entscheidender Bedeutung. Zur Vermeidung von Spiel beziehungsweise Verlust des Zweipunktkontaktes der Kugeln zu den Wälzflächen wird hierzu die Doppelmutter vorgespannt, das heißt, die beiden Muttern werden axial gegeneinander vorgespannt. Dabei muss die Vorspannung entsprechend der DIN-ISO 3408-4 (Entwurf November 2008) um den Faktor 2,83 größer sein als die axiale Belastung der Doppelmutter in axialer Richtung. Überschreitet die Belastung diese Grenze, so wird infolge der axial begrenzten Steifigkeit zwischen der belasteten Mutter und der Gewindespindel, insbesondere infolge der Elastizität der belasteten Kugeln des Kugelkreislaufs der belasteten Mutter und der Laufbahnen, die zweite Mutter gegenüber den Kugeln des dieser zugeordneten Kugelkreislaufs entlastet, so dass diese den Zweipunktkontakt verlieren und es zu einer Veränderung der Kontaktverhältnisse zwischen Kugeln und Laufbahnen kommt. Dies führt wiederum zu einem übermäßigen Gleitreibungsanteil der Kugeln, zu einem Abriss des Schmierfilms und damit letztlich zu einem erhöhten Verschleiß. Um dies zu vermeiden, werden die Vorspannungen entsprechend den zu erwartenden Anforderungen gewählt und mit einem Sicherheitsaufschlag versehen. Durch diese erhöhte Vorspannung die auch im unbelasteten Zustand wirksam ist, steigt in unerwünschter Weise die Reibung des Kugelgewindetriebs, die thermische Belastung nimmt zu und der Wirkungsgrad der Komponente sinkt. Langfristig führt die erhöhte Reibung zu einem Verschleiß der Kugeln und Laufbahnen, so dass die Vorspannung in der Doppelmutter stetig abnimmt, bis die Gebrauchsdauer der Komponente beim Auftreten eines Axialspiels erreicht ist.

Aufgabe der Erfindung ist daher, einen Kugelgewindetrieb mit einer bei vorgegebener Betriebskraft verminderter Vorspannung und damit höherem Wirkungsgrad und geringerem Verschleiß vorzuschlagen.

Die Aufgabe wird durch einen Kugelgewindetrieb mit einer Gewindespindel mit einer ersten gewindeförmigen Laufbahn, mit einer Vielzahl an dieser abwälzenden Kugeln, einer Doppelmutter mit zwei axial benachbart auf der Gewindespindel angeordneten Muttern mit jeweils zweiten, zu der ersten Laufbahn komplementären Laufbahnen zur Aufnahme der Kugeln gelöst, wobei die beiden Muttern gegeneinander unter Bildung einer Axialpressung der Kugeln gegenüber den Laufbahnen axial mittels einer Vorspannkraft vorgespannt und drehfest miteinander verbunden sind und abhängig von einer Betriebsrichtung der Doppelmutter auf der Gewindespindel eine Mutter mit einer zu der Vorspannkraft zusätzlichen axialen Belastung beaufschlagt und die andere Mutter entlastet wird sowie die Muttern gegeneinander bei fehlender zusätzlicher Belastung axial auf Block vorgespannt sind und während eines Betriebs die von der Belastung nicht belastete Mutter mittels einer der Belastung entgegenwirkenden, betragsmäßig geringeren Abstützkraft gegenüber der belasteten Mutter verspannt wird.

Mit dieser Anordnung wird erzielt, dass vergleichsweise geringe und von der auftretenden maximalen Belastung im Betrieb des Kugelgewindetriebs im Wesentlichen unabhängige Vorspannungen eingestellt werden können. Hierbei wird bei einer Belastung wie Vorschubkraft eine Entlastung der nicht belasteten Mutter gegenüber den Kugeln und damit gegenüber der Gewindespindel vermieden, indem die nicht belastete Mutter mit der der Belastung entgegen gerichteten Abstützkraft belastet wird, so dass der Zweipunktkontakt der Kugeln zur Gewindespindel einerseits und zu der nicht belasteten Mutter andererseits erhalten bleibt. Dies wird erfindungsgemäß erzielt, indem nicht die Vorspannung zwischen den Muttern erhöht wird sondern bei für die Betriebskräfte idealer Vorspannung die nicht belastete Mutter durch die Abstützkraft daran gehindert wird, den Kontakt zu den Kugeln zu verlieren. Dabei wird mittels der Abstützkraft lediglich die nicht belastete Mutter entgegen der Belastung über die Kugeln gegen die Gewindespindel verspannt. Auf diese Weise kann eine konstante, niedrige Vorspannung der Muttern gegeneinander in der Doppelmutter unabhängig von der Im Betrieb gewünschten Belastung wie Vorschubkraft eingestellt werden. Es können daher Kugelgewindetriebe mit einheltlicher Vorspannung für einen weiten Bereich verschiedener Belastungsanforderungen eingesetzt werden, da die Anforderung einer 2,83-fachen Vorspannung unterschritten werden kann. Die Abstützkraft bleibt dabei In ihrem Wirkungsbereich nahezu konstant, so dass beispielsweise bei Verwendung von Federelementen beliebige Belastungen kompensiert werden können, die eine Auslenkungen der Muttern bis zum maximalen Federweg der Federelemente verursachen. Da diese Auslenkungen selbst bei sehr hohen Belastungen Im Bereich von wenigen Mikrometern liegen, können mit geringen Vorspannungen sehr hohe Belastungen abgedeckt werden.

Die maximal erreichbare Beschleunigung der Doppelmuttern der Kugelgewindetriebe ergibt sich bei nicht mit der Abstützkraft versehenen Doppelmuttem aus der Beabstandung der beiden Muttern infolge der die Beschleunigung auslösenden Betriebskraft. Hierbei muss die Beschleunigung auf Werte begrenzt werden, bei denen die entlastete Mutter nicht so weit entlastet wird, dass der Zweipunktkontakt zwischen den Laufbahnen und den Kugeln verloren geht. In vorteilhafter Weise bleibt die Abstützkraft an der infolge der einsetzenden Betriebskraft bei Beschleunigung dieser entlasteten Mutter des erfindungsgemäßen Kugelgewindetriebs auch bei hohen Beschleunigungen der Doppelmutter und den daran befestigten Bauteilen erhalten, so dass die Beschleunigung der Doppelmutter unabhängig von der Auslenkung der Muttern gegeneinander ausgelegt werden kann.

In einem vorteilhaften Ausführungsbeispiel kann die Abstützung der Abstützkraft an einem Element abgestützt werden, das axial zwischen den beiden Muttern vorgesehen ist und einen zumindest teilweise geringeren Elastizitätsmodul als der Elastizitätsmodul der Muttern aufweist. Dieses Element kann in einem ersten Flächenbereich zur Ausbildung eines HauptKraftschlusses ein mit dem Elastizitätsmodul der Muttern im Wesentlichen gleiches Elastizitätsmodul und ein in einem zweiten Flächenbereich zur Ausbildung eines Nebenkraftschlusses geringeres Elastizitätsmodul als das Elastizitätsmodul der Muttern aufweisen. Dabei wird die Vorspannung der Muttern gegeneinander durch den Hauptkraftschluss bewirkt und der Nebenkraftschluss axial vorgespannt. Bei hohen Betriebskräften gegenüber der belasteten Mutter wird die nicht belastete Mutter geringfügig im Bereich von wenigen Mikrometern gegenüber der belasteten axial verlagert. Hierbei tritt der Nebenkraftschluss aus dem Hauptkraftschluss axial aus, so dass die nicht belastete Mutter durch den Nebenkraftschluss axial beaufschlagt wird und gegen die Kugeln zur Aufrechterhaltung des Zweipunktkontaktes zwischen den Wälzflächen der Mutter und der Gewindespindel gedrückt wird. Die Steuerung des Austretens des Nebenkraftschlusses aus dem Hauptkraftschluss erfolgt dabei durch die axiale Auslenkung der beiden Muttern gegeneinander und wird durch die axiale Belastung im Betrieb des Kugelgewindetriebs hervorgerufen. Die durch den Nebenschluss bereit gestellte Abstützkraft wird auf die notwendige Kraft abgestimmt, die erforderlich ist, die entlastete Mutter gegen die Kugeln zu pressen.

Der Kugelgewindetrieb eignet sich gleichermaßen für einen Betrieb in beide Richtungen, so dass je nach Betriebsrichtung die Muttern abwechselnd axial belastet beziehungsweise entlastet sind. Hierzu ist die Einwirkung der Abstützkraft jeweils auf beide Muttern vorgesehen, beispielsweise kann ein Nebenkraftschluss durch Ausbildung entsprechender Flächenbereiche mit geringerem Elastizitätsmodul für beide Muttern wirksam vorgesehen werden. Im Weiteren hat sich als vorteilhaft gezeigt, wenn der erste, den Hauptkraftschluss bildende Flächenbereich radial außerhalb des zweiten, den Nebenkraftschluss bildenden Flächenbereichs angeordnet ist. Dabei sind die Flächenbereiche in vorteilhafter Weise ringförmig radial übereinander liegend angeordnet.

Das Element zur Bereitstellung des Haupt- und Nebenkraftschlusses, also mit den in Flächenbereiche aufgeteilten unterschiedlichen Elastizitätsmodulen, kann aus einem axial zwischen den Muttern angeordneten Flanschteil gebildet sein, das in ersten Flächenbereichen auf Block mit den Muttern axial verspannt und in zweiten Flächenbereichen mit geringerem Elastizitätsmodul ebenfalls gegenüber den Muttern vorgespannt ist, jedoch über eine flachere Kraft-Weg-Kennlinie verfügt als die ersten Flächenbereiche hoher Steifigkeit. Grundsätzlich kann diese Funktion in einem einteiligen Flanschteil vorgesehen werden. Es hat sich jedoch als vorteilhaft erwiesen, die zweiten Flächenbereiche in Form von Einsätzen abzubilden, die beispielsweise aus elastischen Elementen gebildet sind. Diese werden in entsprechenden Ausnehmungen, beispielsweise Ringnuten des Flanschteils untergebracht und bauen den Nebenkraftschluss bei Verspannung der Muttern und des Flanschteils gegeneinander auf Block auf. Die Einsätze können vorgespannte Körper mit geringerem Elastizitätsmodul sein, beispielsweise Metallkörper oder Kunststoffkörper. Als vorteilhaftes Ausführungsbeispiel hat sich die Aufnahme von axial wirksamen Federelementen In die Ausnehmungen erwiesen. Derartige Federelemente können Tellerfedern, Membranfedem, Schraubendruckfedern, geschlitzte Federringe oder dergleichen sowie axial geschichtete Pakete dieser sein. Gemäß einem vorteilhaften Ausführungsbeispiel können über den Umfang verteilte Federelemente in entsprechenden komplementären Ausnehmungen eingebracht sein.

Es hat sich als vorteilhaft gezeigt, das Flanschteil als Befestigungsteil wie Befestigungsflansch für den Kugelgewindetrieb vorzusehen, so dass zusätzliche Bauteile und Arbeitsgänge zu dessen Fertigung eingespart werden können. Hierzu ist das Flanschteil radial gegenüber dem Außenumfang der Muttern erweitert und weist entsprechende Öffnungen wie Befestigungsbohrungen zur Aufnahme an einer entsprechenden Trägereinheit, beispielsweise in einer Werkzeug- oder Produktionsmaschine oder dergleichen, auf. Es versteht sich, dass derartige Kugelgewindetriebe auch im Fahrzeugbau als Getriebe zur Wandlung einer Drehbewegung in eine Axialbewegung beispielsweise zur Betätigung von Bremsen, Kupplungen, Kippern von Nutzfahrzeugen und dergleichen verwendet werden können.

Neben der axialen Verspannung gegeneinander sind die Muttern miteinander verdrehgesichert verbunden. Hierzu ist ein Formschluss vorgesehen, der in Umfangsrichtung wirksam ist. Dieser kann beispielsweise mittels eines oder mehrerer über den Umfang der Muttern verteilter Nutensteine gebildet werden, die in entsprechend passgenaue Ausnehmungen an der Oberfläche der Muttern eingelegt und verliergesichert werden. Bei Verwendung eines Flanschteils insbesondere eines Befestigungsflansches mit radial gegenüber den Muttern erweitertem Außendurchmesser können an diesem entsprechende Durchbrüche für den oder die Nutensteine vorgesehen sein. Alternativ oder zusätzlich zu der Verwendung von Nutensteinen kann eine Klauenkupplung, eine Steckverzahnung, eine Bolzenverbindung oder dergleichen vorgesehen werden. Mittels des Formschlusses kann gleichzeitig eine Zentrierung der Muttern aufeinander erfolgen.

Gemäß einem weiteren vorteilhaften Ausführungsbeispiel können die beiden Muttern unter axialer Vorspannung drehschlüssig und axial elastisch miteinander beispielsweise mittels eines oder mehrerer über den Umfang verteilter Blechstreifen oder Blechbügeln miteinander verbunden werden. Dabei werden die Muttern mittels der Kugeln des Kugelgewindetriebs auf der Gewindespindel unter einer vorgegebenen axialen Vorspannung axial vorgespannt und mittels des oder der Blechbügel drehschlüssig miteinander verbunden, indem der oder die Blechbügel beispielsweise mit den Muttern jeweils verschraubt verwenden. Die Steifigkeit des oder der Blechbügel in Umfangsrichtung hält dabei die Vorspannkraft. Unter axialer Belastung einer Mutter mit einer Deformation der Kugeln und Gewindegänge des Kugelgewindetriebs wird der Nebenkraftschluss wie oben bereits beschrieben aktiviert, wobei die beiden Muttern über den oder die Blechbügel axial elastisch angebunden sind. Durch einen Bogen im Blechbügel wird die axiale Steifigkeit abgesenkt, so dass im Gegensatz zu reibungsbehafteten und tribologieabhängigen Geschieben mit Gleitsteinen ohne hohe Toleranzanforderungen über Lebensdauer eine im Wesentlichen konstante drehschlüssige und axial elastische Verbindung der Muttern vorgeschlagen werden kann.

Die Erfindung wird anhand der in den Figuren 1 bis 8 dargesteilten Ausführungsbeispiele näher erläutert. Dabei zeigen:
- Figur 1: eine Ansicht eines Kugelgewindetriebs,
- Figur 2: einen Schnitt durch den Kugelspindeltrieb der Figur 1 entlang der Schnittlinie A-A,
- Figur 3: eine Explosionsdarstellung des Kugelspindeltriebs der Figuren 1 und 2,
- Figur 4: einen Schnitt durch einen gegenüber dem Kugelgewindetrieb der Figuren 1 bis 3 leicht geänderten Kugelgewindetrieb,
- Figur 5: eine Explosionsdarstellung des Kugelgewindetriebs der Figur 5,
- Figur 6: ein Diagramm zur Darstellung der Auslenkung der beiden Muttern bei dem Kugelgewindetrieb der Figuren 1 bis 6 verglichen mit einem konven- tionell ausgebildeten Kugelgewindetrieb mit vorgespannter Doppelmutter,
- Figur 7: eine Ansicht eines gegenüber den Kugelgewindetrieben der Figuren 1 bis 5 leicht veränderten Kugelgewindetriebs
- und Figur 8: einen Schnitt des Kugelgewindetriebs der Figur 7 entlang der Schnittlinie B-B.

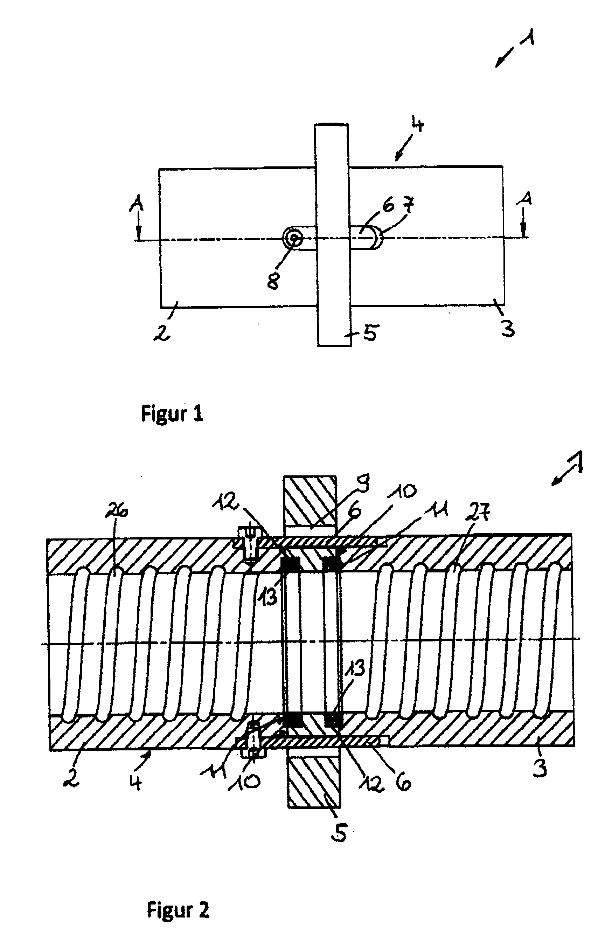

Die Figur 1 zeigt den Kugelgewindetrieb 1 mit der aus den gegeneinander verspannten Muttern 2, 3 gebildeten Doppelmutter 4, die mittels der am Innenumfang der Muttern 2, 3 vorgesehenen Laufbahnen und an einer nicht dargestellten Gewindespindel mit einer Laufbahn für Kugeln den kompletten Gewindetrieb bildet. Zwischen den Muttern 2, 3 ist das Flanschteil 5 angeordnet. Die beiden Muttern 2, 3 sind unter Zwischenlegung des Flanschteils 5, das zugleich ein Befestigungsflansch für den Kugelgewindetrieb 1 sein kann, axial miteinander verspannt, so dass zwischen der nicht dargesteliten Getriebespindel und den Muttern 2, 3 eine vorgegebene Vorspannung eingestellt wird. Hierdurch werden die Kugeln in eine Zweipunktlagerung zwischen den Wälzflächen der jeweiligen Muttern 2, 3 und der Getriebespindel gezwungen. Zur Auslegung und Funktionsweise von Kugelgewindetrieben wird auf den Entwurf der deutschen Norm DIN ISO 3408-4 (November 2008) verwiesen.

In dem gezeigten Ausführungsbeispiel des Kugelgewindetriebs 1 der Figur 1 wird die Vorspannung durch Verspannen der Muttern 2, 3 und des Flanschteils 5 erzielt, indem diese auf Block miteinander verspannt werden und damit einen Hauptkraftschluss ausbilden. Die beiden Muttern 2, 3 sind miteinander drehfest mittels eines Formschlusses verbunden, der durch einander diametral gegenüberliegende Nutensteine 6 gebildet ist, die in entsprechende Ausnehmungen 7 wie Einsenkungen der Muttern 2, 3 eingelegt und mittels der Schraube 8 verliergesichert sind.

Figur 2 zeigt einen Schnitt des Kugelgewindetriebs 1 entlang der Schnittlinie A-A der Figur 1 ohne die Gewindespindel und die Kugeln mit den mit den Laufbahnen 26, 27 versehenen beiden Muttern 2, 3 und dem Flanschteil 5. Die drehfeste Verbindung der beiden Muttern 2, 3 wird über die Nutensteine 6, die entsprechende Öffnungen 9 des Flanschteils 5 durchgreifen, hergestellt.

Die radial äußeren Flächenbereiche 10 bilden den Hauptkraftschluss zwischen den Muttern 2, 3 über das Flanschteil 5 und sind daher steif, das heißt mit hohem Elastizitätsmodul, beispielsweise dem von Stahl versehen. Die radial inneren Flächenbereiche 11 bilden den Nebenkraftschluss und sind entsprechend mit einem geringeren Elastizitätsmodul versehen. Hierzu sind in dem Flanschteil 5 beidseitig Ringnuten 12 eingebracht, in denen jeweils ein Federelement 13 untergebracht ist.

Die Federelemente 13 erstrecken sich im nicht verspannten Zustand über die Stirnfläche des Flanschteils hinaus und sind im verspannten Zustand der Doppelmutter 4 jeweils zwischen dem Flanschteil 5 und der zugeordneten Mutter 2, 3 axial verspannt. Bei einer beispielsweise auf die Mutter 2 wirkenden Betriebskraft des Kugelgewindetriebs 1 werden die betroffenen Bauteile insbesondere die Kugeln und Laufbahnen 26 elastisch verformt. Um infolge dieser elastischen Verformung die Vorspannung der Mutter 3 gegenüber den dieser zugeordneten Kugeln und Laufbahnen 27 zur Aufrechterhaltung eines Zweipunktkontaktes vorzuhalten, ist der Nebenkraftschluss mit der entsprechend eingestellten Abstützkraft vorgesehen. Sinkt die Restvorspannung in Mutter 3 unter einen vorgegebenen Wert, der durch die Ausbildung und das Elastizitätsmodul der nachgiebigen Elemente, beispielsweise der Kugeln und Laufbahnen der Mutter 2 unter Belastung, vorgegeben ist, treten die Federelemente 13 aus dem Hauptkraftschluss aus und beaufschlagen die Mutter 3 gegenüber den Kugeln und der Gewindespindel. Hierdurch wirkt die der Vorspannung der beiden Muttern 2, 3 entgegenwirkende Abstützkraft, die betragsmäßig geringer als die Vorspannung und ausreichend dimensioniert ist, den Zweipunktkontakt der Mutter 3 zu den Kugeln und dieser zu der Gewindespindel aufrecht zu erhalten.

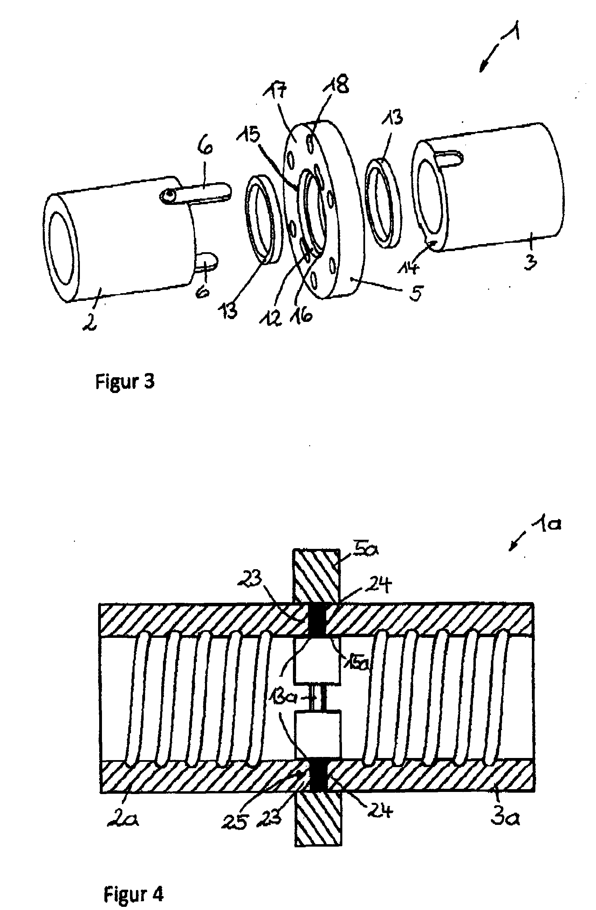

Figur 3 zeigt den Kugelgewindetrieb 1 der Figuren 1 und 2 in Explosionsdarstellung. Die Muttern 2, 3 werden an ihren Stirnflächen 14 zweifach mit unterschiedlichen Axialkräften eines Hauptkraftschlusses mit Blockverspannung gegenüber dem Flanschteil 5 und eines Nebenkraftschlusses über die Federelemente 13 beaufschlagt. Die Federelemente 13 sind dabei in Ausnehmungen 15 wie Ringnuten 12 aufgenommen und stützen sich an deren Stirnflächen 16 axial ab.

Das Flanschteil 5 ist als Befestigungsflansch 17 ausgebildet, so dass der Kugelgewindetrieb 1 mittels der Öffnungen 18 an einem Maschinenteil oder Trägerteil einer Werkzeug-, Produktionsmaschine oder dergleichen aufgenommen werden kann.

Die beiden Muttern 2, 3 sind miteinander in Umfangsrichtung formschlüssig mittels der Nutensteine 6 verbunden.

Figur 4 zeigt einen Schnitt durch einen gegenüber dem Kugelgewindetrieb 1 leicht veränderten Kugelgewindetrieb 1a. Im Unterschied hierzu sind an den Muttern 2a, 3a axiale Vorsprünge 23, 24 vorgesehen, die jeweils in Ausnehmungen 15a des Flanschteils 5a axial eingreifen. Hierdurch wird ein Formschluss in Umfangsrichtung in Form einer Klauenkupplung 25 zwischen den beiden Muttern 2a, 3a gebildet.

in dem gezeigten Ausführungsbeispiel dient die Klauenkupplung gleichzeitig als Nebenkraftschluss für die Muttern 2a, 3a. Hierzu sind die Ausnehmungen 15a im Flanschteil 5a durchgestellt und zwischen den Vorsprüngen 23, 24 Federelemente 13a angeordnet.

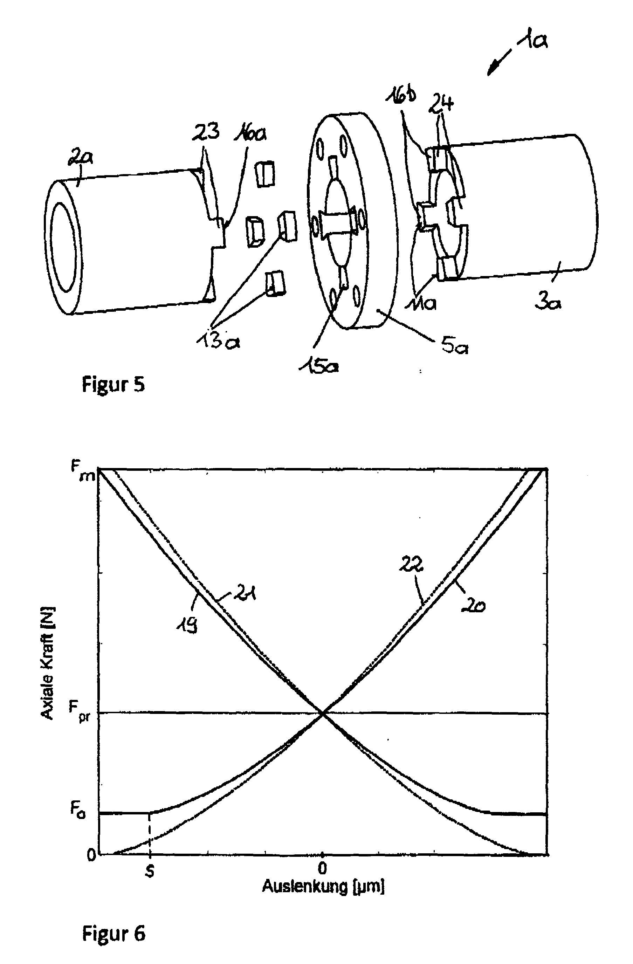

Figur 5 zeigt den Kugelgewindetrieb 1a der Figur 4 in Explosionsdarstellung mit den Muttern 2a, 3a und dem Flanschteil 5a. Die Vorsprünge 23, 24 der Muttern 2a, 3a greifen in die im Flanschteil 5a vorgesehenen durchgestellten Ausnehmungen 15a ein und verspannen die Federelemente 13a bei axialer Verspannung der Muttern 2a, 3a und des Flanschteils 5a auf Block, Die Federelemente 13a können beispielsweise aus elastischem Material wie Kunststoff gebildet sein. Dabei kann zwischen den Federelementen 13a und den Ausnehmungen 15a ein Radial- und/oder Umfangsspiel vorgesehen sein, in das die Federelemente 13a bei axialer Vorspannung ausweichen können.

Im Gegensatz zu dem Kugelgewindetrieb 1 der Figuren 1 bis 3 sind die zweiten Flächenbereiche 11a zur Beaufschlagung der nicht belasteten Mutter, beispielsweise der Mutter 3a, nicht in dem Flanschteil 5a ausgebildet sondern werden jeweils durch die Stirnflächen 16a der jeweils belasteten Mutter - hier der Mutter 2a - gebildet, indem diese ein Widerlager für die Federelemente 13a bilden, die wiederum die Stirnflächen 16b der Mutter 3a axial beaufschlagen.

Figur 6 zeigt ein Diagramm zur Darstellung einer auf die Muttern gegenüber der Gewindespindel auftretenden axialen Kraft, die abhängig vom Betriebszustand des Kugelgewindetriebs aus der Vorspannung der Muttern und deren axialer Belastung zusammengesetzt ist, über eine durch die Belastung hervorgerufene axiale Auslenkung. Dabei wird das Kraft-Weg-Verhalten des erfindungsmäßen Kugelgewindetriebs 1 anhand der durchgezogen dargestellten Graphen 19, 20 für jeweils eine der Muttern einer erfindungsgemäßen Doppelmutter und anhand der gepunktet dargestellten Graphen 21, 22 das Kraft-Weg-Verhalten eines Kugelgewindetriebs einer Doppelmutter mit konventionell auf Block mit ausschließlichen im Hauptkraftschluss vorgespannten Muttern-Verhalten nach dem Stand der Technik dargestellt.

Die beiden Kugelgewindetriebe sind in dem gezeigten Ausführungsbeispiel im nicht belasteten Zustand des Kugelgewindetriebs mit derselben Vorspannkraft Fₚᵣ gegeneinander verspannt, eine Auslenkung der Muttern gegeneinander findet daher nicht statt. Wird je nach Betriebsrichtung wie axialer Auslenkungsrichtung der Muttern gegenüber der Gewindespindel die jeweilige Mutter axial belastet, das heißt, die axiale, auf die belastete Mutter wirkende Kraft steigt ausgehend von der Auslenkung 0, während die auf die nicht belastete Mutter wirkende Kraft abfällt, nimmt die Auslenkung der beiden Muttern gegeneinander zu. Beispielsweise steigt der Graph 21 der belasteten Mutter an, während der Graph 22 abfällt. In dem konventionellen Kugelgewindetrieb fällt dabei der Graph 22 auf Null, wenn die axiale Kraft des Graphen 21 die maximale axiale Kraft Fₘ erreicht hat, die laut DIN-ISO 3408-4 den Wert 2,83 hat. Soll daher vermieden werden, dass der Graph 22 zu Null wird, also keine Vorspannung mehr an der entlasteten Mutter mehr anliegt und die Kugeln dieser den Zweipunktkontakt verlieren, muss die Doppelmutter eines konventionellen Kugelgewindetriebs zumindest auf die maximale axiale Kraft Fₘ und eine zuzuschlagende Verschleißreserve eingestellt werden.

Bei der erfindungsgemäßen Vorspannung der Muttern steigt die axiale Kraft der belasteten Mutter bei Belastung ebenfalls an, im Unterschied zur entlasteten Mutter des Graphen 22 fällt die axiale Kraft der entlasteten Mutter des Graphen 20 nicht auf Null sondern erreicht bei der Auslenkung s ein Niveau, das durch die Abstützkraft Fₐ erzeugt wird und bei der Auslenkung s auftritt, wenn beispielsweise Federelemente des Nebenkraftschlusses aus dem Hauptkraftschluss austreten.

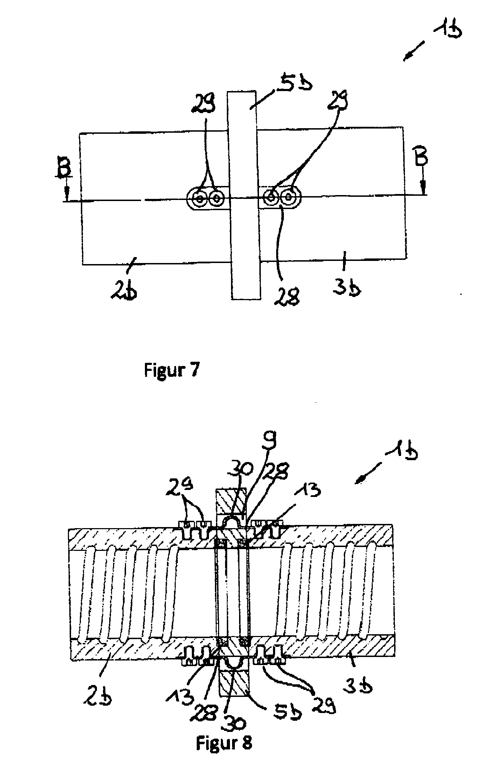

Die Figuren 7 und 8 zeigen den gegenüber den Kugelgewindetrieben 1, 1a der Figuren 1 bis 5 veränderten Kugelgewindetrieb 1 b in Ansicht beziehungsweise entlang der Schnittlinie B-B mit den Muttern 2, 3b und dem zwischen diesen angeordneten, die Federelemente 13 aufnehmenden Flanschteil 5b. Der drehschlüssige Formschluss wird aus axial elastischen Blechbügeln 28 gebildet, die jeweils fest mit den Muttern 2b, 3b verbunden - hier mittels der Schrauben 29 verschraubt sind. Die axiale Steifigkeit der Blechbügel 28 wird durch den radial Bogen 30 zwischen den Schrauben 29 vermindert, der die Öffnung 9 des Flanschteils durchgreift. Durch die Ausbildung des Bogens 30 in den Blechbügeln 28 wird bei im Wesentlichen unveränderter Steifigkeit dieser in Umfangsrichtung eine Verminderung der deren axialer Steifigkeit bewirkt, so dass eine wenig korrosions- und toleranzempfindliche Ausbildung einer drehschlüssig und axial elastischen Verbindung der beiden Muttern 2b, 3b miteinander erzielt wird.

Durch die beidseitig an den Muttern 2b, 3b fest angeordneten Blechbügel 28 werden diese drehschlüssig aufeinander unter axialer Vorspannung der nicht dargestellten Kugeln gegenüber der ebenfalls nicht dargestellten Gewindespindel aufeinander fixiert. Bei einer durch axiale Belastung einer Mutter erfolgenden axialen Belastung der anderen Mutter erfolgt eine axiale Beabstandung der Muttern 2b, 3b wobei der Nebenkraftschluss in Form der Federelemente 13 aktiviert wird. Die Steifigkeit der Federelemente in Umfangsrichtung verhindert dabei ein Lösen der Vorspannung der beiden Muttern 2b,, 3b über die Gewindespindel und die Kugeln, wobei bei elastischer Stauchung von Teilen dieser unter Last ein entstehendes Axialspiel durch den Nebenkraftschluss ausgeglichen wird.

### Bezugszeichenliste

- 1: Kugelgewindetrieb
- 1a: Kugelgewindetrieb
- 1b: Kugelgewindetrieb
- 2: Mutter
- 2a: Mutter
- 2b: Mutter
- 3: Mutter
- 3a: Mutter
- 3b: Mutter
- 4: Doppelmutter
- 5: Flanschteil
- 5a: Flanschteil
- 5b: Flanschteil
- 6: Nutenstein
- 7: Ausnehmung
- 8: Schraube
- 9: Öffnung
- 10: Flächenbereich
- 11: Flächenbereich
- 11a: Flächenbereich
- 12: Ringnut
- 13: Federelement
- 13a: Federelement
- 14: Stirnflächen
- 15: Ausnehmung
- 15a: Ausnehmung
- 16: Stirnfläche
- 16a: Stirnfläche
- 16b: Stirnfläche
- 17: Befestigungsflansch
- 18: Öffnung
- 19: Graph
- 20: Graph
- 21: Graph
- 22: Graph
- 23: Vorsprung
- 24: Vorsprung
- 25: Klauenkupplung
- 26: Laufbahn
- 27: Laufbahn
- 28: Blechbügel
- 29: Schraube
- 30: Bogen
- A-A: Schnittlinie
- B-B: Schnittlinie
- Fₐ: Abstützkraft
- Fₘ: maximale axiale Kraft
- Fₚᵣ: Vorspannkraft bei nicht belastetem Kugelgewindetrieb
- s: Auslenkung

## Patentansprüche

1. Kugelgewindetrieb (1, 1a, 1b) mit einer Gewindespindel mit einer ersten gewindeförmigen Laufbahn, mit einer Vielzahl an dieser abwälzenden Kugeln, einer Doppelmutter (4) mit zwei axial benachbart auf der Gewindespindel angeordneten Muttern (2, 2a, 2b, 3, 3a, 3b) mit jeweils zweiten, zu der ersten Laufbahn komplementären Laufbahnen (26,27) zur Aufnahme der Kugeln, wobei die beiden Muttern (2, 2a, 2b, 3, 3a, 3b) gegeneinander unter Bildung einer Axialpressung der Kugeln gegenüber den Laufbahnen axial mittels einer Vorspannkraft (Fₒᵣ) vorgespannt und drehfest miteinander verbunden sind und abhängig von einer Betriebsrichtung der Doppelmutter (4) auf der Gewindespindel eine Mutter (2, 2a, 2b, 3, 3a, 3b) mit einer zu der Vorspannkraft (Fₚᵣ) zusätzlichen Belastung beaufschlagt und die andere Mutter (3, 3a, 3b, 2, 2a, 2b) entlastet wird, **dadurch gekennzeichnet, dass** die Muttern (2, 2a, 2b, 3, 3a, 3b) gegeneinander bei fehlender zusätzlicher Belastung axial auf Block vorgespannt sind und während eines Betriebs die von der Belastung nicht belastete Mutter (3, 3a, 3b, 2, 2a, 2b) mittels einer der Belastung entgegenwirkenden, betragsmäßig geringeren Abstützkraft (Fₐ) gegenüber der belasteten Mutter (2, 2a, 2b, 3, 3a, 3b) verspannt wird.

2. Kugelgewindetrieb (1, 1a, 1b) nach Anspruch 1, **dadurch gekennzeichnet, dass** zwischen den beiden Muttern (2, 2a, 2b, 3, 3a, 3b) ein Element mit einem zumindest teilweise geringeren Elastizitätsmodul als das Elastizitätsmodul der Muttern (2, 2a, 2b, 3, 3a, 3b) eingebracht ist.

3. Kugelgewindetrieb (1, 1a, 1b) nach Anspruch 2, **dadurch gekennzeichnet, dass** das Element in einem ersten Flächenbereich (10) zur Ausbildung eines Hauptkraftschlusses ein mit dem Elastizitätsmodul der Muttern zumindest gleiches Elastizitätsmodul und ein in einem zweiten Flächenbereich (11,11a) zur Ausbildung eines Nebenkraftschlusses geringeres Elastizitätsmodul als das Elastizitätsmodul der Muttern (2, 2a, 2b, 3, 3a, 3b) aufweist.

4. Kugelgewindetrieb (1, 1a, 1b) nach Anspruch 3, **dadurch gekennzeichnet, dass** die Flächenbereiche (10, 11, 11a) gegenüber beiden Muttern (2, 2a, 2b, 3, 3a, 3b) wirksam sind.

5. Kugelgewindetrieb (1, 1a, 1b) nach Anspruch 3 oder 4, **dadurch gekennzeichnet, dass** der erste Flächenbereich (10) radial außerhalb des zweiten Flächenbereichs (11, 11a) angeordnet ist.

6. Kugelgewindetrieb (1,1a,1b) nach einem der Ansprüche 3 bis 5, **dadurch gekennzeichnet, dass** das Element als Flanschteil (5, 5a) mit zumindest einer im zweiten Flächenbereich (11,11a) eingebrachten Ausnehmung (15,15a) ausgebildet ist und in der zumindest einen Ausnehmung (15, 15a) ein axial wirksames Federelement (13, 13a) aufgenommen ist.

7. Kugelgewindetrieb (1,1b) nach einem der Ansprüche 3 bis 6, **dadurch gekennzeichnet, dass** am Flanschteil (5, 5b) beidseitig Ringnuten (12) für die Aufnahme der Federelemente (13) vorgesehen sind.

8. Kugelgewindetrieb (1a) nach einem der Ansprüche 3 bis 6, **dadurch gekennzeichnet, dass** über den Umfang verteilte Ausnehmungen (15a) vorgesehen sind, in die axial wirksame Federelemente (13a) eingebracht sind.

9. Kugelgewindetrieb (1, 1a, 1b) nach einem der Ansprüche 6 bis 8, **dadurch gekennzeichnet, dass** das Flanschteil (5, 5a) ein Befestigungsflansch des Kugelgewindetriebs (1, 1a, 1b) ist.

10. Kugelgewindetrieb (1,1a, 1b) nach einem der Ansprüche 1 bis 9, **dadurch gekennzeichnet, dass** die beiden Muttern (2, 2a, 1b, 3, 3a, 1b) in Umfangsrichtung formschlüssig miteinander verbunden sind.
